# EUROPEAN PATENT SPECIFICATION

(11) **EP 3 415 644 B1**
(45) Date of publication and mention of the grant of the patent: **23.03.2022**
(21) Application number: 18177084.3
(22) Date of filing: 11.06.2018
(51) Int. Cl.: A43D 11/00, B25J 15/04, B25J 15/06, C14B 7/04, C14B 17/06, A43D 25/00, A43D 117/00, B25J 15/00, C14B 17/04

(54) **METHOD AND APPARATUS FOR JOINING PATCHES OF HIDES OR SIMILAR MATERIAL BY GLUING**
VERFAHREN UND VORRICHTUNG ZUM VERBINDEN VON HÄUTENTEILEN ODER ÄHNLICHEM MATERIAL DURCH GLÜHEN
PROCÉDÉ ET APPAREIL POUR REJOINDRE DES PIECES DE PEAUX OU DE MATÉRIAUX SIMILAIRES PAR COLLAGE

(30) Priority: 13.06.2017 IT 201700065559
(43) Date of publication of application: 19.12.2018
(73) Proprietor: AUTEC di Geri Ing. Fabrizio & C. S.A.S., 56038 Ponsacco (PI) (IT)
(72) Inventor: GERI, Fabrizio, 56038 Ponsacco (PI) (IT)
(74) Representative: Leotta, Antonio

(56) References cited:
- EP-A1- 0 348 311
- EP-A1- 2 740 572
- FR-A1- 2 911 255

## Description

### TECHNICAL FIELD

The invention is part of the technical sector of the equipment for processing hide after this, released from the tannery, is used for the production of various items, such as hide goods, footwear, accessories, garments clothing and the like.

### STATE OF THE ART

For all these articles, it is common practice to cut the individual patches of hide, with the pre-established profile, from the whole hide, which, once duly assembled, will form the desired article of hide goods, footwear or clothing.

The joining between the same patches and/or with other elements such as linings, padding and accessories, is usually achieved by sewing, but it's quite frequent also the gluing technique, which can be combined with the seam but also disjoined from this, for certain areas or details.

In the production of said articles, especially those "top of the range", i.e. the most valuable and/or intended to receive prestigious brands, a certain part of the work is still entrusted to the hands of specialized workers.

For example, the production cycle of wallets and handbags, but not only, involves the application of a lining that covers the side of the skin that remains within the article and that would remain visible once the article is completed.

A known technique for joining the patch of hide with the lining, which can be made of silk or other fabric, is of a mixed type, that is, partly automatic and partly manual.

The automatic part comprises a conveyor belt coated with a non-woven fabric pad or highly breathable and absorbent synthetic material for padding, below which depression means act so that the conveyor belt itself, at least in a certain length, behave like a suction plan.

An operative group with Cartesian axes acts above the conveyor belt taking a patch of hide from a compartment to the side where a pile of the same patches is housed, and transferrng it onto the moving conveyor belt, with a system known as "pick and place", in the section where the belt is in suction.

Immediately afterwards, with conveyor belt in movement, a spray nozzle associated with the same group applies glue to the newly deposited patch, which is then conveyed to the outlet and taken by an operator who manually applies, in a suitable position on the surface with the glue, a lining.

The suction given by the conveyor belt, due to the considerable dispersion of the depression occurring in the area not covered by the patch, is insufficient to retain the latter in the precise position where the pick and place deposits it.

Accordingly, it is to be expected that the spraying program will cover a larger area than that strictly necessary in order to compensate any displacement of the patch on the belt; this inevitably means that the other side of the patch, which is intended to be on the outside of the article, is also dirty with glue, in addition to the fact that the excess spray is wasted and soils the carpet of the conveyor belt making it unusable in a short time.

The lack of reliability with regard to the position of the patch on the conveyor belt makes it very difficult to automate the manual gluing phase of the lining, for the obvious reason that the predetermined mutual positioning would not be guaranteed.

It is obvious that such inaccuracies are increasingly unacceptable for the luxury products mentioned above.

An apparatus for joining by adhesive patches of leather pieces to fabrics is known from EP2740572 A1.

### SUMMARY OF THE INVENTION

The object of the present invention is therefore to propose a method and apparatus for joining patches of hides or similar material by means of gluing, to avoid said drawbacks, in particular to prevent glue smearing on the side of the patch which remains on the outside, therefore visible.

Another object of the invention is to ensure a precise positioning of the patch to be received by the adhesive, so that a program for automatic application of the latter can be calibrated exactly according to the surface to be treated, without the waste afflicting the known technique.

Still another object of the invention is to allow, thanks to said precise positioning of the patch that receives the glue, to automate the next stage for joining thereto a second patch or a liner or other.

A further object of the invention is to use the positioning accuracy to provide, if necessary, a further automatic operating station, downstream of the gluing station, in which performing another processing in the coupled patches.

Yet another object of the invention is to be able to provide an apparatus which is simple, reliable and compact in size.

These and other objects are fully achieved by a method for joining patches of hides or similar material, with the latter having predetermined profile and dimensions, in said method being provided:
- the positioning and removable blocking of a format support above a supporting plan provided in a gluing station, with said format support having a surface which is suitably less than that of said patches, with a predetermined thickness and its relative upper surface suitable to act as a suction plane;
- the positioning of a first patch of said patches above said upper surface of the support, such that said first patch has the side intended to receive the upfacing adhesive, that is centered with respect to the same support and that its relative perimeter edge protrudes outwardly with respect to the latter, so that the same first patch is also raised with respect to said supporting plan;
- the suction blocking of said first patch on said upper surface of the support, by means of depression means acting beneath the latter through holes present in the same support;
- the application of at least one adhesive layer on said upper side of the first patch;
- the positioning in adherence of a second patch (2) over the first (1), with a predetermined alignment, so as to mutually clamp them together;
- the deactivation of said depression means, in order to unlock the coupled patches (1,2);
- the collection of said coupled patches from said support, to transfer them to another operating station or to conveyor members.

Said objects are further achieved by means of an apparatus for joining together patches of hide with the latter having predetermined profile and dimensions, with said apparatus comprising:
- a format support having a surface suitably less than that of said patches, a predetermined thickness and being concerned, in the direction of the latter, by a plurality of holes originating from its respective upper surface and leading into an common intermediate chamber, which has at least one opening towards a the- lower surface of the support;
- a supporting plan, provided in a gluing station, on which is removably detachable said support, which said upper surface is adapted to receive in support a first patch of said patches,
which is raised with respect to said supporting plan and with the side intended to receive the upward-facing adhesive, the same first patch being centered with respect to the same support and with its relative perimeter edge projecting outwardly with respect to the latter;
- vacuum generating organs associated below said supporting plan and connected through said lower opening and common intermediate chamber, with the above said holes of the support, so that the upper surface of the latter defines a suction plane for locking said first patch to the support thereof;
- dispensing members, for the application of at least one adhesive layer on said upper side of the first patch.

### BRIEF DESCRIPTION OF THE DRAWINGS

The characteristics of the present invention will be apparent from the following description of a preferred embodiment of the method, as well as of realization of the relative apparatus, according to the object, according to what is proposed in the claims and with the aid of the attached drawings, in which:
- Fig. 1 shows a plan view of a format support provided in the apparatus for implementing the method in question;
- Fig. 2 shows the support of Fig. 1 in a partially sectioned front view;
- Fig. 3 illustrates the support, in a view similar to Fig. 2, associated with a supporting plan and carrying a patch of hide or similar above it;
- Fig. 4 shows a plan view of Fig. 3;
- Fig. 5 illustrates an aboveall axonometric view of the apparatus for implementing the method in question;
- Fig. 6 schematically illustrates the operative members associated with the robotic arm of the apparatus of Fig. 5;
- Fig. 7 shows, according to the arrow A of Fig. 6, a side view of a detachable part of the operative members;
- Figs. from 8 to 15 schematically show, in plan, respective operating steps of the method implemented by the apparatus of Fig. 5.

### DESCRIPTION OF THE PREFERRED EMBODIMENTS

In the above-mentioned figures, a first patch of hide, or similar material, having a predetermined profile and dimension, has been indicated with reference number 1.

With reference number 2 has been indicated a second patch of material similar to the first or other semi-rigid or floppy material, such as silk, fabric or other material.

In the figures, by way of example, the second patch 2 has a profile and dimensions equal to the first patch 1, but it is obvious that this should not be considered as limiting as effectively possible in practice.

With reference 3 it has been indicated a format support having a surface which is suitably less than that of said patches 1, 2, and a predetermined thickness, indicatively of the order of 10mm.

The format support 3 is involved, in the direction of its thickness, by a plurality of holes 30 originating from the respective upper surface 3S and opening into a common intermediate chamber 31, which has at least one opening 32 towards the lower surface 3B of the support 3.

In the accompanying figures, the upper surface 3S copies the profile of the first patch 1, reduced so that the edge 1B of the latter, when superimposed on the support 1, protrudes outwardly of a predetermined dimension, of the order of about 1-2 mm.

Said support 3 represents the essential element for the realization of the method in question, which provides:
- the positioning and removable blocking of said format support 3 above a supporting plan 4 provided in a gluing station S1, with the relative upper surface 3S facing upwards;
- the positioning of a first patch of said patches (1) above said upper surface (3S) of the support (3), such that said first patch (1) has the side (1A) intended to receive the up-facing adhesive, that is centered with respect to the same support (3) and that its perimeter edge (1B) protrudes outwardly with respect to the latter, so that the same first patch (1) is also raised with respect to said supporting plan (4);
- the suction of said first patch (1) on said upper surface (3S) of the support (3) by means of depression means acting beneath the latter through holes (30, 31, 32) present in the same support (3);
- the application of at least one adhesive layer on said upper side (1A) of the first patch (1);
- the positioning in adherence of a second patch (2) over the first patch (1), with a predetermined alignment, so as to mutually clamp them together;
- the deactivation of said depression means, in order to unlock the coupled patches (1,2);
- the collection of said coupled patches (1, 2) from said support (3), to transfer them to other operating station (S2) or to conveyor members (T).

In the operating steps of the method listed above, it should be noted that the application of the glue takes place with the first patch 1 on the support 3, which, being smaller than the latter, can not be soiled with glue.

The first patch 1, moreover, being held up by the supporting plan 4, can not be soiled on the downward side by any glue residues previously fallen on the absorbent carpet of the supporting plan 4.

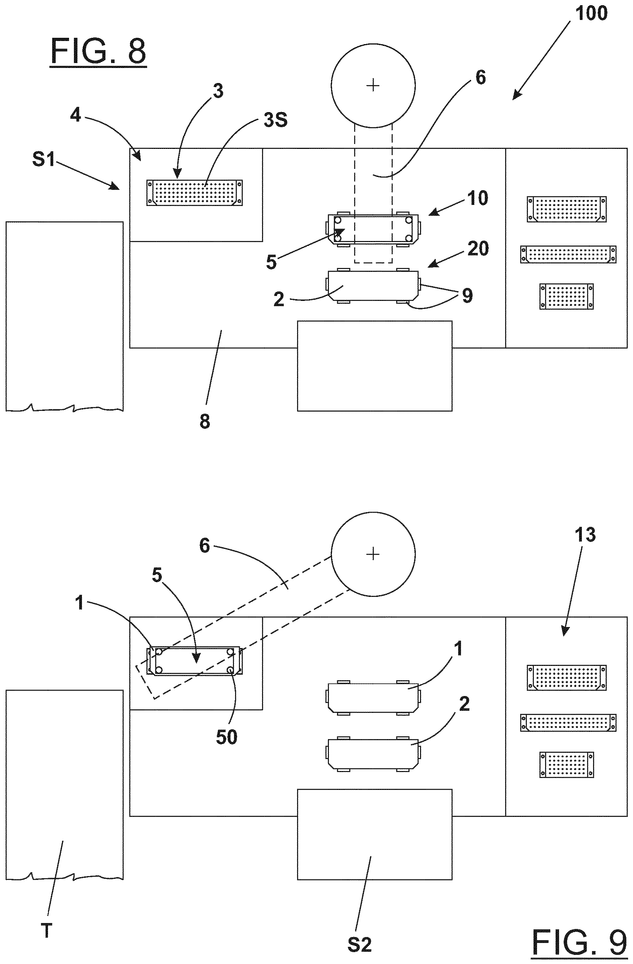

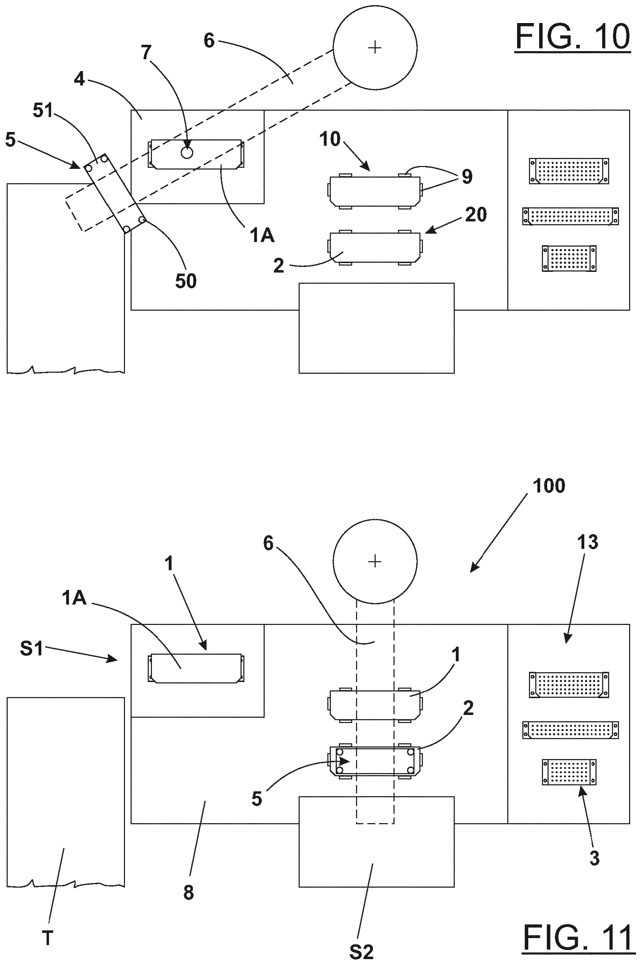

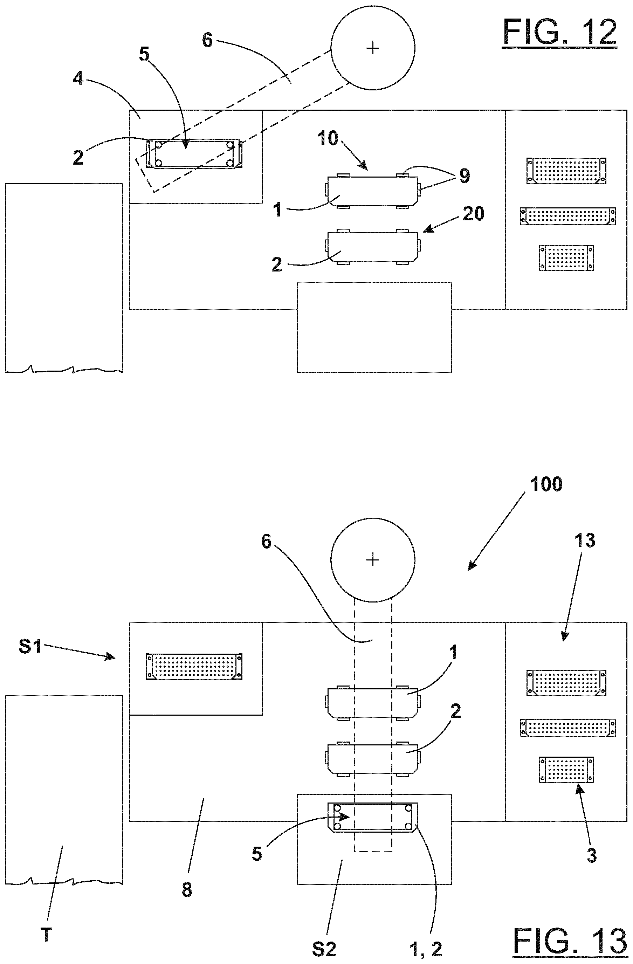

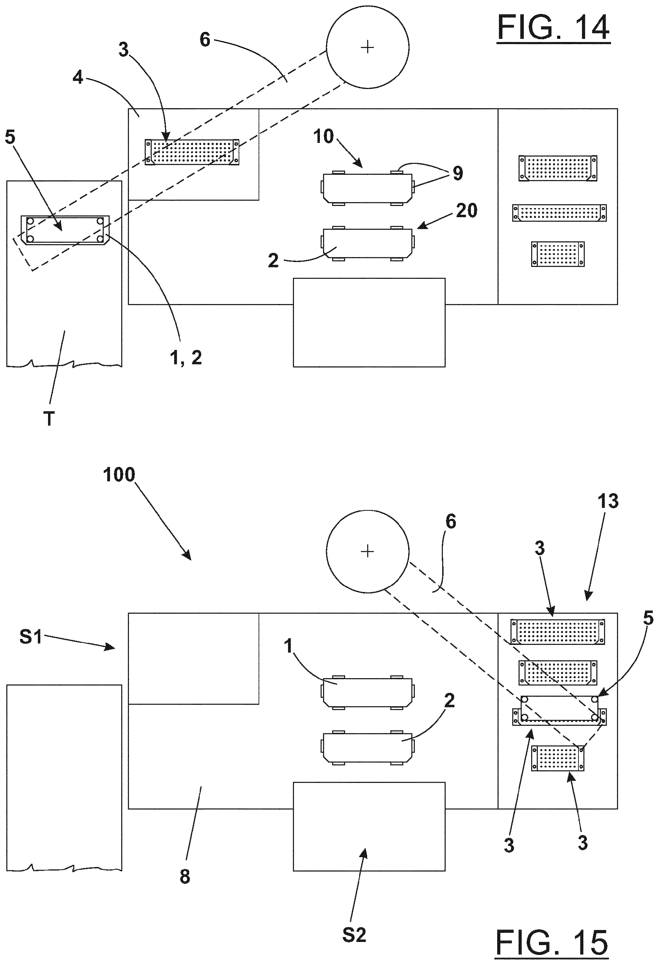

The above described steps can be carried out manually, in particular with regard to the movement of patches 1, 2, however the method, due to its peculiarities, advantageously lends itself to an actuation by means of automated means, in the presence of which are provided the following additional operations:
- the loading of a first stack of patches 1, with the side 1A on which apply the adhesive upwardly oriented, into a first dimensioned housing 10, placed on the side of said gluing station S1;
- the loading of a second stack of patches 2, with the side to be coupled with said first patch 1 faced downwardly, in a second dimensioned housing 20, placed on the side of the first 10;
- the collection, by means of gripping organs 5, of the first patch 1 from time to time at the top of the respective stack (Fig. 8) to transfer it, by means of controlled axle handling organs 6, above said support 3 (Fig. 9);
- said adhesive application on the first patch 1, by means of dispensing members 7 associated with said controlled axle handling organs 6 (Fig. 10);
- the collection, after said adhesive application and by means of the same gripping organs 5, of the second patch 2 from time to time at the top of the respective stack (Fig. 11) to transfer it, by the action of said controlled axle handling organs 6, above the first patch 1 and pasting the latter (Fig. 12);
- the collection of said coupled patches 1, 2 from said support 3, after said deactivation of said depression means, by means of said gripping organs 5, and the movement of the said coupled and glued patches 1, 2, by means of said controlled axle handling organs 6, towards said other operative station S2 (Fig. 13) or towards said conveyor members T (Fig. 14).

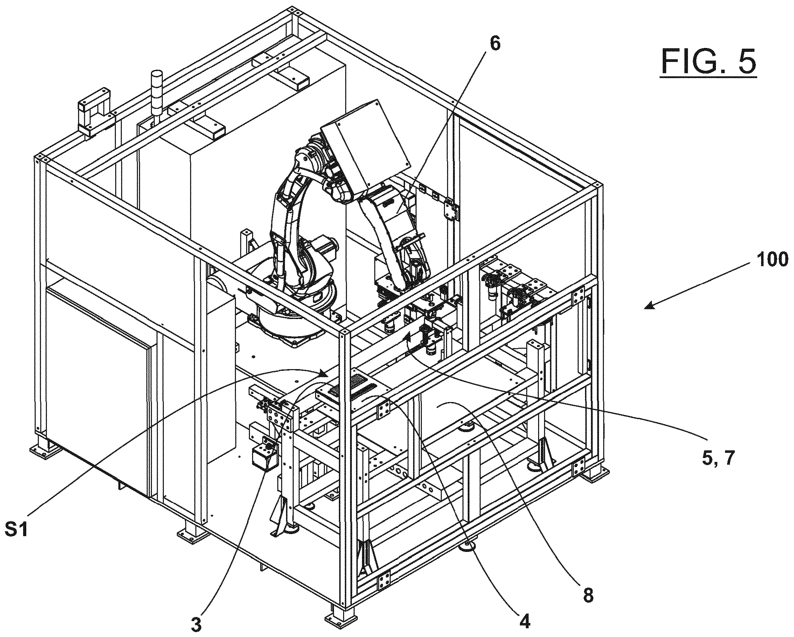

Fig. 5 shows, as a whole, an apparatus 100 provided with the necessary organs for carrying out the above described automated steps of the method.

In a preferred, although not exclusive, embodiment, the apparatus 100 comprises at least one of the already described format supports 3, which is detachably locked to said supporting plan 4, provided in said gluing station S1.

The format support 3 is made of non-stick synthetic material, for example in a single body, as shown; advantageously, with the 3D printing technique it is possible to obtain the common intermediate chamber 31 without any difficulty.

By conventional technique, molding and subsequent joining of two elements is provided, with glue, screw means, ultrasonic welding or other; the two elements can be constituted, respectively, by the base (which can be the same for all formats) and the upper format plate.

The supporting plan 4 is coated on the top with a layer of breathable and absorbent material 4A, for example made of non-woven fabric or of known padding synthetic material.

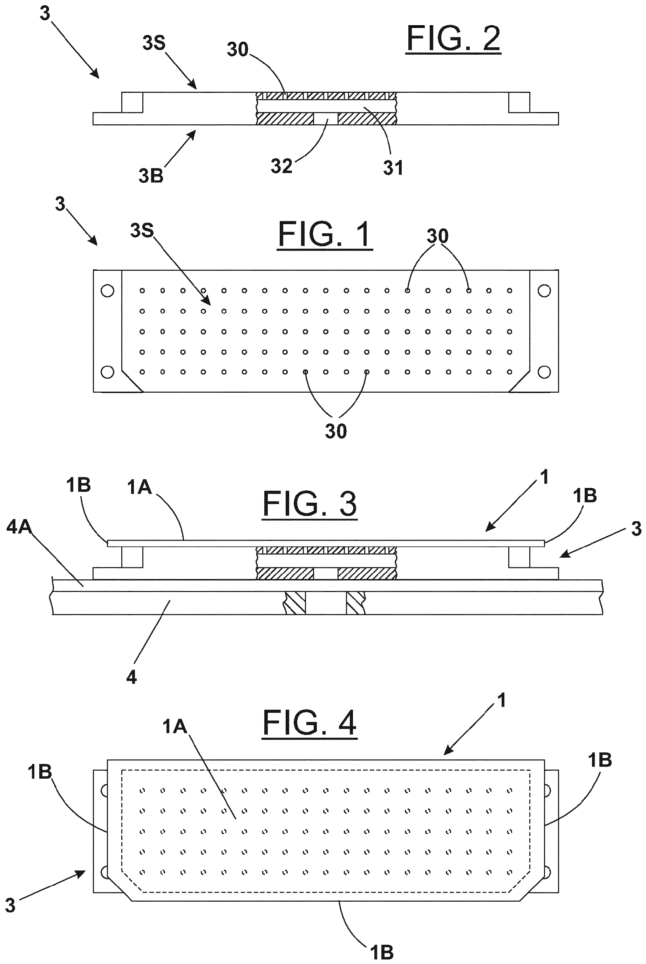

Inferior to the supporting plan 4 there are provided vacuum generating means (of a known type not illustrated) made communicating, through said lower opening 32 and common intermediate chamber 31, with said holes 30 of the support 3, whereby the upper surface 3S of the latter defines a suction plane for blocking said first patch 1 to the support 3 itself (see in particular Fig. 3).

The supporting plan 4 is arranged next to a wider support base 8, for example horizontal. (Fig. 8 and following).

On the support base 8 a first dimensioned housing 10 is made, arranged next to said gluing station S1, suitable for containing a stack of said first patches 1, with the side 1A on which apply the adhesive directed upwardly.

Close to the first dimensioned housing 10, on the same support base 8, a second housing 20 is provided, adapted to contain a stack of second patches 2, intended to be glued to said first patches 1 and oriented with the side to be joined to these facing downwards.

Said dimensioned housings 10, 20 may, for example, be delimited by blocks 9, removably locked, in known manner, to said base 8. Alternatively, the dimensioned housings 10, 20 can be constituted by supports formed by 3D printing techniques.

In the apparatus 100 said controlled axle handling organs 6 are provided, positioned close to the support base 8 and preferably constituted by an anthropomorphic robot, as can be seen in Fig. 5.

In an exemplary embodiment not illustrated, said controlled axle handling organs 6 can be of the cartesian axis type.

The gripping organs 5 are associated at the end of the arm of the anthropomorphic robot 6, designed to pick up and retain, selectively, said first and second patches 1, 2.

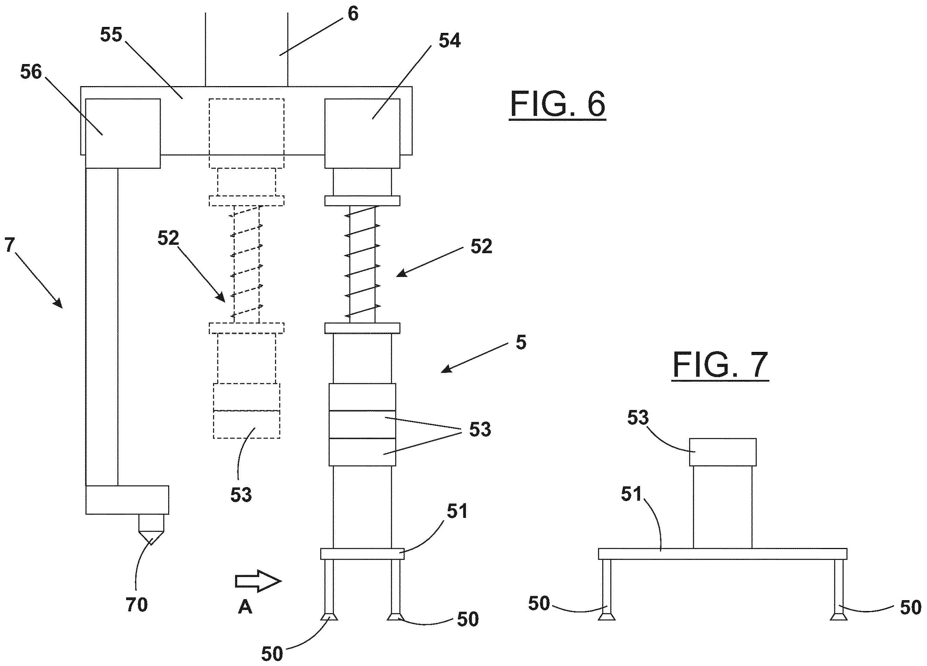

The gripping organs 5 (Figs. 6 and 7) are advantageously of the suction type and comprise suction cups 50 appropriately arranged according to the dimensions of the patches 1, 2.

The suction cups 50 are fixed to a plate 51 which is made integral with a vertical column 52 by means of a quick coupling 53, so that when the format is changed it is possible to quickly replace the suction cups 50 assembly with another one. Alternatively, the gripping organs 5 can be of the needle type, more suitable and effective when it is necessary to remove breathable patches such as fabrics.

The vertical column 52 can perform elastic axial compression excursions to absorb shocks during the descent steps of the suction cups 50, as well as to make positioning errors substantially irrelevant due to possible variations in the thickness of the hides which make it difficult to predict the height of the pile of patches.

The vertical column 52 is at the top attached to a first cart 54, slidable horizontally on a guide 55 associated with the arm of the robot 6, so as to be able to adjust its position; the latter is stabilized by locking means, not shown, which inhibit the movement of the cart 54.

It is possible to provide a second vertical column 52 associated with the same guide 55 (indicated by a broken line in Fig. 6), in order to mount, if necessary, a second suction cups 50 assembly.

A second cart 56 is slidably coupled to the same guide 55, which supports, with the possibility of horizontal adjustment, said adhesive dispensing members 7, comprising at least one nozzle 70.

On the side of the support base 8, in respective positions reachable by the robot 6, they can be advantageously provided:
- a storage 13 for parking a number of format supports, from which they can be picked up and arranged on the supporting plan 4 in place of another (Fig. 15);
- said second operating station S2 (Fig. 13), for carrying out an accessory processing on the coupled patches 1, 2, for example for folding one edge;
- said conveyor members T, for example a conventional conveyor belt, designed to evacuate from the apparatus 100 the coupled patches 1, 2 towards the outlet (Fig. 14).

The anthropomorphous robot 6 is guided by a programmable software for executing the sequence of movements necessary for the implementation of the operating steps described above by the gripping organs 5 and the adhesive dispensing members 7.

From what has been described above, it is clear how the proposed method and apparatus are improved, with respect to the known art, for joining patches of hides or similar material by means of adhesive, eliminating the risk of gluing smears on the side of the patch that will remain on the outside of the article, therefore visible, thanks to the use of a support that can not be dirty and that keeps the patch raised from the underlying support surface.

The solution which provides for applying the adhesive with the stationary patch in a station, positioned precisely and permanently locked rather than moving on a belt and with a random position, allows to precisely program the movements of the spraying nozzle on the basis at the surface and shape of the patch, at the same time avoiding waste of adhesive.

It is important to point out that the precise and repeatable positioning of the patch which receives the adhesive is the indispensable condition, precluded with the known art, in order to automate the subsequent coupling of a second patch or a lining or other.

The maneuvering versatility offered by the anthropomorphic robot of the proposed apparatus allows to easily prepare, if necessary, a further automatic operating station, downstream of the gluing one, in which to carry out another processing in the coupled patches.

As can be seen in the attached drawings, the proposed apparatus presents simple constructive solutions, a fundamental prerequisite for high reliability, and is advantageously of compact dimensions.

However, it is understood that the above description has an exemplifying and non-limiting value, therefore any variants of detail that may be necessary for technical and/or functional reasons are considered from now on falling within the same protective scope defined by the following claims.

## Claims

1. Method for joining by adhesive patches of hides, with the latter having a predetermined profile and size, said method being **characterized in that** it provides:
- the positioning and removable blocking of a format support (3) above a supporting plan (4) provided in a gluing station (S1) with said format support (3) having a surface suitably less than that of said patches (1), with a predetermined thickness and with its upper surface (3S) suitable to act as a suction plane;
- the positioning of a first patch of said patches (1) above said upper surface (3S) of the support (3), such that said first patch (1) has the side (1A) intended to receive the up-facing adhesive, that is centered with respect to the same support (3) and that its perimeter edge (1B) protrudes outwardly with respect to the latter, so that the same first patch (1) is also raised with respect to said supporting plan (4);
- the suction of said first patch (1) on said upper surface (3S) of the support (3) by means of depression means acting beneath the latter through holes (30, 31, 32) present in the same support (3);
- the application of at least one adhesive layer on said upper side (1A) of the first patch (1);
- the positioning in adherence of a second patch (2) over the first patch (1), with a predetermined alignment, so as to mutually clamp them together;
- the deactivation of said depression means, in order to unlock the coupled patches (1,2);
- the collection of said coupled patches (1, 2) from said support (3), to transfer them to other operating station (S2) or to conveyor members (T).

2. Method according to claim 1, **characterized in that** it comprises: the loading of a first stack of patches (1), with the side (1A) on which the adhesive is to be applied upwardly oriented, into a first dimensioned housing (10), placed on the side of said gluing station (S1); the loading of a second stack of patches (2) with the side to be coupled with said first patch (1) faced downwardly in a second dimensioned housing (20) placed on the side of the first dimensioned housing (10); the collection, by means of gripping organs (5), of the first patch (1) from time to time at the top of the respective stack to transfer it by means of controlled axle handling organs (6) above said support (3); said adhesive application on the first patch (1), by means of dispensing members (7) associated with said controlled axle handling organs (6); the collection, after said adhesive application and by means of the same gripping organs (5) of the second patch (2) from time to time at the top of the respective stack to transfer it, by the action of said controlled axle handling organs (6) above the first patch (1) and pasting it to the latter (1); the collection of said coupled patches (1, 2) from said support (3) after said deactivation of said depression means by means of said gripping organs (5) and the movement of said coupled and glued patches (1, 2), by means of said controlled axle handling organs (6), towards said other operating station (S2) or towards said conveyor members (T).

3. Apparatus for joining by adhesive patches of hides, with the latter having a predetermined profile and size, **characterized in that** it comprises:
- a format support (3) having a surface suitably less than that of said patches (1), a predetermined thickness and being concerned, in the direction of the latter, by a plurality of holes (30) originating from its upper surface (3S) and leading into a common intermediate chamber (31), which has at least one opening (32) towards a lower surface (3B) of the format support (3);
- a supporting plan (4) provided in a gluing station (S1) on which is removably detachable said format support (3), which said upper surface (3S) is adapted to receive in support a first patch of said patches (1) which is raised with respect to said supporting plan (4) and with the side (1A) intended to receive the upward-facing adhesive, the same first patch (1) being centered with respect to the same format support (3) and with its perimeter edge (1B) projecting outwardly with respect to the latter;
- vacuum generating organs associated below said supporting plan (4) and connected through the aforementioned lower opening (32) and common intermediate chamber (31) with the above said holes (30) of the format support (3) so that the upper surface (3S) of the latter defines a suction plane for locking said first patch (1) to the format support (3) thereof;
- dispensing members (7), for the application of at least one adhesive layer on said upper side (1A) of the first patch (1);
- gripping organs (5), adapted to pick and hold selectively said first and second patches (1, 2).

4. Apparatus according to claim 3, **characterized in that** it further comprises:
- a first dimensioned housing (10) disposed on the side of said gluing station (S1), able to hold a stack of said first patches (1), with the side (1A) on which the adhesive is to be applied facing upwardly;
- a second dimensioned housing (20) disposed on the side of the first dimensioned housing (10), adapted to hold a stack of second patches (2) intended to be glued to said first patches (1) and oriented with the side to be coupled to these facing downwardly;
- controlled axle handling organs (6) associated whit said gripping organs (5) and the aforesaid adhesive dispensing members (7) provided for disposing said gripping organs (5) in correspondence of said first (10) or second dimensioned housing (20), for picking up the first (1) or second patch (2) from time to time at the top of the respective stack and then transferring it over said format support (3), then for determining translations of said adhesive dispensing members (7) for applying said at least one adhesive layer on the upper side (1A) of the first patch (1) disposed on the format support (3), finally for disposing said gripping organs (5) to collect from said format support (3), the paired and glued patches (1, 2), to move them to another operating station (S2) or to conveyor members (T).

5. Apparatus according to claim 4, **characterized in that** said format support (3) is made of synthetic non-sticky material and has a profile similar to that of the relative first patch (1), suitably smaller, so that the perimeter edge (1B) of the same first patch (1), arranged on the format support (3), protrudes externally from the contour of this in an almost uniform way.

6. Apparatus according to claim 4, **characterized in that** said gripping organs (5) are of the suction type and comprise suction cups (50) fastened to a plate (51) made solid by means of a quick coupling (53) to a vertical column (52) which is elastically cushioned, with the latter being secured on the top to a first cart (54) horizontally slidable and lockable with respect to a guide (55) associated with said controlled axle handling organs (6).

7. Apparatus according to claim 4, **characterized in that** said supporting plan (4) is coated on the top with a breathable and absorbent material (4S).

8. Apparatus according to claim 6, **characterized in that** said adhesive dispensing members (7) comprise at least one nozzle (70) and are associated with said guide (55) by means of a second cart (56) slidable and lockable at predetermined positions.

9. Apparatus according to claim 4 or any of the following claims 5-8 **characterized in that** it provides a storage (13) for parking a certain number of said format supports (3), which are available to be picked up and arranged on the supporting plan (4).

10. Apparatus according to claim 4 or any of the following claims 5-9 **characterized in that** said controlled axle handling organs (6) are of the anthropomorphic type.

## Patentansprüche

1. Verfahren zum Verbinden von Lederflicken durch Kleben, wobei die letzteren ein vorbestimmtes Profil und eine vorbestimmte Größe aufweisen, wobei das Verfahren **dadurch gekennzeichnet ist, dass** es Folgendes vorsieht:
- das Positionieren und abnehmbare Verriegeln eines Formatträgers (3) über einer in einer Klebestation (S1) vorgesehenen Auflagefläche (4), wobei der Formatträger (3) eine Oberfläche aufweist, die Geeignete kleiner als die der Flecken (1) ist, mit einer vorbestimmten Dicke und mit einer oberen Fläche (3S), die geeignet ist, als Saugebene zu wirken;
- die Positionierung eines ersten Flickens der obengenannten Flicken (1) über der oberen Fläche (3S) des Trägers (3), so dass der erste Flicken (1) die Seite (1A) hat, die dazu bestimmt ist, den nach oben weisenden Klebstoff aufzunehmen, die in Bezug auf denselben Träger (3) zentriert ist, und dass sein Umfangsrand (1B) in Bezug auf den letzteren nach außen vorsteht, so dass derselbe erste Flicken (1) auch in Bezug auf die Stützebene (4) angehoben ist;
- das Ansaugen des ersten Flickens (1) an der Oberseite (3S) des Trägers (3) mittels Unterdruckmitteln, die unter diesem durch in demselben Träger (3) vorhandene Löcher (30, 31, 32) wirken;
- das Aufbringen mindestens einer Klebstoffschicht auf die Oberseite (1A) des ersten Flickens (1);
- das Aufkleben eines zweiten Flickens (2) auf das erste Flicken (1) mit einer vorbestimmten Ausrichtung, um sie miteinander zu verklemmen;
- die Deaktivierung des Druckmittels, um die gekoppelten Flicken (1, 2) zu entriegeln;
- das Einsammeln der gekoppelten Flicken (1, 2) von der Halterung (3), um sie zu einer anderen Arbeitsstation (S2) oder zu Förderelementen (T) zu übertragen.

2. Verfahren nach Anspruch 1, **dadurch gekennzeichnet, dass** es umfasst: das Laden eines ersten Stapels von Flicken (1), wobei die Seite (1A), auf die der Klebstoff aufgetragen werden soll, nach oben gerichtet ist, in ein erstes dimensioniertes Gehäuse (10), das an der Seite der Klebestation (S1) angeordnet ist; das Laden eines zweiten Stapels von Flicken (2) mit der Seite, die mit dem ersten Flicken (1) verbunden werden soll, nach unten in ein zweites dimensioniertes Gehäuse (20), das an der Seite des ersten dimensionierten Gehäuses (10) angeordnet ist; das Aufnehmen des ersten Flickens (1) mittels Greifmitteln (5) von Zeit zu Zeit an der Spitze des jeweiligen Stapels, um ihn mittels gesteuerter Achsenhandhabungsmittel (6) oberhalb des Trägers (3) zu transportieren; wobei das Auftragen des Klebstoffs auf das erste Flicken (1) mit Hilfe von Abgabeelementen (7), die mit den gesteuerten Achsenhandhabungsmitteln (6) verbunden sind; das Aufnehmen des zweiten Flickens (2) nach dem Auftragen des Klebstoffs und mittels derselben Greifmittel (5) von Zeit zu Zeit am oberen Ende des jeweiligen Stapels, um ihn durch die Wirkung der gesteuerten Achsenhandhabungsmittel (6) über dem ersten Flicken (1) zu übertragen und ihn an letzteren (1) zu kleben; das Einsammeln der gekoppelten Flicken (1, 2) von dem Träger (3) nach der Deaktivierung der Niederdrückmittel mittels der Greifmittel (5) und die Bewegung der gekoppelten und geklebten Flicken (1, 2) mittels der gesteuerten Achsenhandhabungsmittel (6) in Richtung der anderen Arbeitsstation (S2) oder in Richtung der Förderelemente (T).

3. Vorrichtung zum Verbinden von Lederflicken durch Kleben, wobei die letzteren ein vorbestimmtes Profil und eine vorbestimmte Größe haben, **dadurch gekennzeichnet, dass** es umfasst:
- einen Formatträger (3), der eine Oberfläche hat, die geeignete kleiner ist als die der besagten Lederflicken (1), eine vorbestimmte Dicke hat und in Richtung der letzteren von einer Vielzahl von Löchern (30) betroffen ist, die von seiner oberen Oberfläche (3S) ausgehen und in eine gemeinsame Zwischenkammer (31) führen, die mindestens eine Öffnung (32) in Richtung der unteren Oberfläche (3B) des Formatträgers (3) hat:
- eine Stützebene (4), die in einer Klebestation (S1) vorgesehen ist, auf der der genannte Formatträger (3) abnehmbar ist, wobei die genannte obere Fläche (3S) geeignet ist, eines ersten Flickens der obengenannten Flicken (1) zu tragen, der in Bezug auf die genannte Stützebene (4) und mit der Seite (1A), die dazu bestimmt ist, den nach oben gerichteten Klebstoff aufzunehmen, erhöht ist, wobei derselbe erste Flicken (1) in Bezug auf denselben Formatträger (3) zentriert ist und mit seinem Umfangsrand (1B) in Bezug auf letzteren nach außen vorsteht;
- mittel zur Vakuumerzeugung, die unterhalb der Auflagefläche (4) angeordnet sind und über die vorgenannte untere Öffnung (32) und eine gemeinsame Zwischenkammer (31) mit den vorgenannten Löchern (30) des Formatträgers (3) verbunden sind, so dass die obere Fläche (3S) des letzteren eine Saugebene für die Befestigung des ersten Flickens (1) an dessen Formatträger (3) definiert;
- Spenderelemente (7) zum Aufbringen mindestens einer Klebstoffschicht auf die Oberseite (1A) des ersten Flickens (1);
- Greifmittel (5), die geeignet sind, das erste und zweite Flicken (1, 2) selektiv aufzunehmen und zu halten.

4. Vorrichtung nach Anspruch 3, **dadurch gekennzeichnet, dass** sie ferner umfasst:
- ein erstes dimensioniertes Gehäuse (10), das an der Seite der Klebestation (S1) angeordnet ist und einen Stapel der ersten Flicken (1) halten kann, wobei die Seite (1A), auf die der Klebstoff aufgetragen werden soll, nach oben weist;
- ein zweites bemessenes Gehäuse (20), das auf der Seite des ersten bemessenen Gehäuses (10) angeordnet ist und einen Stapel von zweiten Flicken (2) aufnehmen kann, die mit den ersten Flicken (1) verklebt werden sollen, und das so ausgerichtet ist, dass die Seite, die mit diesen verbunden werden soll, nach unten weist;
- eine gesteuerte Achsenhandhabungseinrichtung (6), die mit der Greifeinrichtung (5) und den vorgenannten Klebstoffabgabeelementen (7) verbunden ist, die dazu vorgesehen ist, die Greifeinrichtung (5) in Übereinstimmung mit dem ersten (10) oder dem zweiten dimensionierten Gehäuse (20) anzuordnen,um das erste (1) oder das zweite Flicken(2) von Zeit zu Zeit an der Spitze des jeweiligen Stapels aufzunehmen und es dann über den Formatträger (3) zu übertragen, dann zum Bestimmen von Übersetzungen der Klebstoffabgabeelemente (7) zum Auftragen der mindestens einen Klebstoffschicht auf die Oberseite (1A) des ersten auf dem Formatträger (3) angeordneten Flickens (1), schließlich zum Anordnen der Greifmittel (5), um die gepaarten und geklebten Flicken (1, 2) von dem Formatträger (3) zu sammeln, um sie zu einer anderen Arbeitsstation (S2) oder zu Förderelementen (T) zu bewegen.

5. Vorrichtung nach Anspruch 4, **dadurch gekennzeichnet, dass** der Formatträger (3) aus synthetischem, nicht klebendem Material hergestellt ist und ein ähnliches Profil wie das des jeweiligen ersten Flickens (1) aufweist, das entsprechend kleiner ist, so dass der Umfangsrand (1B) desselben ersten Flickens (1), der auf dem Formatträger (3) angeordnet ist, von der Kontur desselben in nahezu gleichmäßiger Weise nach außen vorsteht.

6. Vorrichtung nach Anspruch 4, **dadurch gekennzeichnet, dass** die Greifmittel (5) vom Saugtyp sind und Saugnäpfe (50) umfassen, die an einer Platte (51) befestigt sind, die mittels einer Schnellkupplung (53) an einer vertikalen Säule (52) befestigt ist, die elastisch gedämpft ist, wobei letztere oben an einem ersten Wagen (54) befestigt ist, der horizontal verschiebbar und verriegelbar in Bezug auf eine Führung (55) ist, die mit den gesteuerten Achsenhandhabungsmitteln (6) verbunden ist.

7. Vorrichtung nach Anspruch 4, **dadurch gekennzeichnet, dass** die Tragfläche (4) auf der Oberseite mit einem atmungsaktiven und absorbierenden Material (4S) beschichtet ist.

8. Vorrichtung nach Anspruch 6, **dadurch gekennzeichnet, dass** die Klebstoffabgabeelemente (7) mindestens eine Düse (70) umfassen und mit der Führung (55) mittels eines zweiten Wagens (56) verbunden sind, der an vorbestimmten Positionen verschiebbar und verriegelbar ist.

9. Vorrichtung nach Anspruch 4 oder einem der folgenden Ansprüche 5 bis 8, **dadurch gekennzeichnet, dass** sie ein Lager (13) zum Abstellen einer bestimmten Anzahl der Formatträger (3) vorsieht, die zum Aufnehmen und Anordnen auf der Auflagefläche (4) bereitstehen.

10. Vorrichtung nach Anspruch 4 oder einem der folgenden Ansprüche 5 bis 9, **dadurch gekennzeichnet, dass** die gesteuerten Achsenhandhabungsmittel (6) vom anthropomorphen Typ sind.

## Revendications

1. Procédé pour joindre par adhésif des pièces de peaux, ces dernières ayant un profil et une taille prédéterminés, ledit procédé étant **caractérisé en ce qu'il** prévoit:
- le positionnement et le blocage amovible d'un support de format (3) au-dessus d'un plan de support (4) prévu dans une station d'encollage (S1), ledit support de format (3) ayant une surface convenablement inférieure à celle desdites pièces (1), avec une épaisseur prédéterminée et avec sa surface supérieure (3S) adaptée pour agir comme un plan d'aspiration;
- le positionnement d'un premier pièce desdits pièces (1) au-dessus de ladite surface supérieure (3S) du support (3), de sorte que ledit premier pièce (1) a le côté (1A) destiné à recevoir l'adhésif tourné vers le haut, qui est centré par rapport au même support (3) et que son bord périphérique (1B) fait saillie vers l'extérieur par rapport à ce dernier, de sorte que le même premier pièce (1) est également élevé par rapport audit plan de support (4);
- l'aspiration dudit premier pièce (1) sur ladite surface supérieure (3S) du support (3) au moyen de moyens de dépression agissant sous ce dernier à travers des trous (30, 31, 32) présents dans le même support (3);
- l'application d'au moins une couche adhésive sur ladite face supérieure (1A) du premier pièce (1);
- le positionnement en adhérence d'un deuxième pièce (2) sur le premier pièce (1), avec un alignement prédéterminé, de façon à les serrer mutuellement ensemble;
- la désactivation desdits moyens de dépression, afin de déverrouiller les pièces couplées (1, 2);
- la collecte desdites pièces couplées (1, 2) à partir dudit support (3), pour les transférer vers une autre station d'opération (S2) ou vers des éléments de convoyeur (T).

2. Procédé selon la revendication 1, **caractérisé en ce qu'il** comprend: le chargement d'une première pile de pièces (1), avec le côté (1A) sur lequel l'adhésif doit être appliqué orienté vers le haut, dans un premier logement dimensionné (10), placé sur le côté de ladite station de collage (S1); le chargement d'une deuxième pile de pièces (2) avec le côté à coupler avec ladite première pièce (1) orienté vers le bas dans un deuxième logement dimensionné (20) placé sur le côté du premier logement dimensionné (10); la collecte, au moyen de moyens de préhension (5), de la première pièce (1) de temps en temps au sommet de la pile respective pour la transférer au moyen de moyens de manipulation à axe commandés (6) au-dessus dudit support (3); ladite application d'adhésif sur la première pièce (1), au moyen d'éléments de distribution (7) associés auxdits moyens de manipulation d'essieux commandés (6); la collecte, après ladite application d'adhésif et au moyen des mêmes moyens de préhension (5) de la deuxièmee pièce (2) de temps en temps au sommet de la pile respective pour la transférer, par l'action desdits moyens de manipulation d'essieux commandés (6) au-dessus de la première pièce (1) et la coller à cette dernière (1); la collecte desdites pièces couplées (1, 2) à partir dudit support (3) après ladite désactivation dudit moyen de dépression au moyen dudit moyen de préhension (5) et le déplacement desdites pièces couplées et collées (1, 2), au moyen dudit moyen de manipulation d'axe commandés (6), vers ledit autre poste de travail (S2) ou vers lesdits éléments de convoyeur (T).

3. Appareil pour joindre par adhésif des pièces de peaux, ces dernières ayant un profil et une taille prédéterminés, **caractérisé en ce qu'il** comprend:
- un support de format (3) ayant une surface convenablement inférieure à celle desdites pièces (1), une épaisseur prédéterminée et étant concerné, dans la direction de ces dernières, par une pluralité de trous (30) provenant de sa surface supérieure (3S) et menant dans une chambre intermédiaire commune (31), qui a au moins une ouverture (32) vers la surface inférieure (3B) du support de format (3); un plan de support (4) prévu dans une station de collage (S1) sur laquelle est détachable de manière amovible ledit support de format (3), dont ladite surface supérieure (3S) est adaptée pour recevoir en support un premier pièce desdits pièces (1) qui est surélevé par rapport audit plan de support (4) et avec le côté (1A) destiné à recevoir l'adhésif tourné vers le haut, le même premier pièce (1) étant centré par rapport au même support de format (3) et avec son bord périphérique (1B) faisant saillie vers l'extérieur par rapport à ce dernier;
- des moyens générateurs de vide associés au-dessous dudit plan de support (4) et reliés, par l'intermédiaire de l'ouverture inférieure (32) susmentionnée et de la chambre intermédiaire commune (31), aux trous (30) susmentionnés du support de format (3) de sorte que la surface supérieure (3S) de ce dernier définit un plan d'aspiration pour verrouiller ladite première pièce (1) au support de format (3) de celui-ci;
- des éléments de distribution (7), pour l'application d'au moins une couche d'adhésif sur ladite face supérieure (1A) de la première pièce (1);
- des moyens de préhension (5), adaptés pour saisir et maintenir sélectivement lesdits premier et deuxième pièces (1, 2).

4. Appareil selon la revendication 3, **caractérisé en ce qu'il** comprend en outre:
- un premier logement dimensionné (10) disposé sur le côté de ladite station de collage (S1), capable de contenir une pile desdits premiers pièces (1), avec le côté (1A) sur lequel l'adhésif doit être appliqué tourné vers le haut;
- un deuxième logement dimensionné (20) disposé sur le côté du premier logement dimensionné (10), adapté pour contenir une pile de deuxièmes pièces (2) destinées à être collées auxdites premières pièces (1) et orientées avec le côté à coupler à celles-ci tourné vers le bas;
- des moyens de manipulation d'axes commandés (6) associés auxdits moyens de préhension (5) et aux éléments de distribution d'adhésif (7) susmentionnés, prévus pour disposer lesdits moyens de préhension (5) en correspondance avec ledit premier (10) ou deuxième logement dimensionné (20), pour saisir de temps en temps le premier (1) ou deuxième pièce (2) au sommet de la pile respective et le transférer ensuite sur ledit support de format (3), puis pour déterminer les translations desdits éléments de distribution d'adhésif (7) pour appliquer ladite au moins une couche d'adhésif sur le côté supérieur (1A) du premier pièce (1) disposé sur le support de format (3), enfin pour disposer lesdits moyens de préhension (5) pour collecter dudit support de format (3), les pièces appariés et collés (1, 2), pour les déplacer vers une autre station d'opération (S2) ou vers des éléments de convoyeur (T).

5. Appareil selon la revendication 4, **caractérisé en ce que:** ledit support de format (3) est réalisé en matériau synthétique non collant et présente un profil similaire à celui de la première pièce relative (1), convenablement plus petit, de sorte que le bord périphérique (1B) de la même première pièce (1), disposée sur le support de format (3), fait saillie à l'extérieur du contour de celui-ci d'une manière presque uniforme.

6. Appareil selon la revendication 4, **caractérisé en ce que:** lesdits moyens de préhension (5) sont du type à aspiration et comprennent des ventouses (50) fixées à une plaque (51) rendue solide au moyen d'un accouplement rapide (53) à une colonne verticale (52) qui est amortie élastiquement, cette dernière étant fixée sur le dessus à un premier chariot (54) pouvant coulisser horizontalement et être verrouillé par rapport à un guide (55) associé auxdits moyens de manipulation d'axe commandés (6).

7. Appareil selon la revendication 4, **caractérisé en ce que:** ledit plan de support (4) est revêtu sur le dessus d'un matériau respirant et absorbant (4S).

8. Appareil selon la revendication 6, **caractérisé en ce que:** lesdits éléments de distribution d'adhésif (7) comprennent au moins une buse (70) et sont associés audit guide (55) au moyen d'un second chariot (56) pouvant coulisser et être verrouillé à des positions prédéterminées.

9. Appareil selon la revendication 4 ou l'une quelconque des revendications 5-8 suivantes, **caractérisé en ce qu'il** prévoit un stockage (13) pour parquer un certain nombre desdits supports de format (3), qui sont disponibles pour être ramassés et disposés sur le plan de support (4).

10. Appareil selon la revendication 4 ou l'une quelconque des revendications 5-9 suivantes, **caractérisé en ce que** lesdits moyens de manipulation d'essieux commandés (6) sont de type anthropomorphique.
